# EUROPÄISCHE PATENTSCHRIFT

(11) **EP 3 265 268 B1**
(45) Veröffentlichungstag und Bekanntmachung des Hinweises auf die Patenterteilung: **24.07.2024**
(21) Anmeldenummer: 15713653.2
(22) Anmeldetag: 04.03.2015
(51) Int. Cl.: B23K 26/70, H01S 3/00, G02B 5/00, G21K 1/10, B23K 101/00

(54) **STRAHLFALLE, STRAHLFÜHRUNGSEINRICHTUNG, EUV-STRAHLUNGSERZEUGUNGSVORRICHTUNG UND VERFAHREN ZUM ABSORBIEREN EINES STRAHLS**
BEAM TRAP, BEAM GUIDE DEVICE, EUV RADIATION GENERATING APPARATUS, AND METHOD FOR ABSORBING A BEAM
PIÈGE À FAISCEAU, DISPOSITIF DE GUIDAGE DE FAISCEAU, DISPOSITIF DE PRODUCTION DE RAYONNEMENT EUV ET PROCÉDÉ D'ABSORPTION D'UN FAISCEAU

(43) Veröffentlichungstag der Anmeldung: 10.01.2018
(73) Patentinhaber: TRUMPF Lasersystems for Semiconductor Manufacturing GmbH, 71254 Ditzingen (DE)
(72) Erfinder: LAMBERT, Martin, 71404 Korb (DE)
(74) Vertreter: Kohler Schmid Möbus Patentanwälte
(86) Internationale Anmeldenummer: PCT/EP2015/054507
(87) Internationale Veröffentlichungsnummer: WO 2016/138951

(56) Entgegenhaltungen:
- WO-A1-2012/100846
- CN-A- 104 048 755
- DE-A1- 10 033 787
- DE-A1- 102010 036 161
- DE-A1- 102012 219 635
- DE-A1- 3 027 590
- JP-A- S60 119 502
- US-A- 4 511 216
- US-A- 4 864 098

## Beschreibung

Die vorliegende Erfindung betrifft eine Strahlfalle, umfassend: einen Reflektor zur Reflexion eines auf eine Oberfläche des Reflektors auftreffenden Strahls, insbesondere eines Laserstrahls, sowie eine Absorbereinrichtung zur Absorption des an der Oberfläche des Reflektors reflektierten Strahls. Die Erfindung betrifft auch eine Strahlführungseinrichtung zur Führung eines Laserstrahls in Richtung auf einen Zielbereich zur Erzeugung von EUV-Strahlung, welche eine solche Strahlfalle aufweist. Die Erfindung betrifft auch eine EUV-Strahlungserzeugungsvorrichtung mit einer solchen Strahlführungseinrichtung sowie ein Verfahren zum Absorbieren eines Strahls, insbesondere zum Absorbieren eines Laserstrahls.

Eine Strahlfalle der eingangs genannten Art, bei der die Oberfläche des Reflektors eine Kegelfläche bildet, ist in der JP S60 119502 A, der DE 100 33 787 A1, der DE 30 27 590 A1 sowie in der US 4 864 098 A beschrieben.

CN 104 048 755 A offenbart eine Strahlfalle, wobei die Strahlfalle einen Konus mit einer konkav gekrümmten Fläche aufweist. An der konus wird ein kollimierter auftrefender Strahl reflektiert. Der Konus ist segmentiert und weist zwei Bereiche auf. Die von der konkav gekrümmten Fläche reflektierte Strahlung wird auf eine Vielzahl von gezackt dargestellten Strukturen verteilt.

Eine Strahlfalle zur Absorption der Strahlungsenergie unerwünschter Laserstrahlung ist aus der DE 10 2010 036 161 A1 bekannt geworden. Die dort beschriebene Strahlfalle umfasst zwei Reflektoren, wobei mindestens einer der beiden Reflektoren mit einer Strahlungsenergie absorbierenden Beschichtung versehen ist. Die beiden Reflektoren sind so zueinander positioniert, dass die auf einen ersten Reflektor treffende und dabei reflektierte Laserstrahlung auf den zweiten Reflektor gerichtet ist. Die auf den zweiten Reflektor treffende und dabei reflektierte Laserstrahlung ist zurück auf den ersten Reflektor gerichtet, so dass nach vielfachen Reflexionen und dabei stetiger teilweiser Absorption die Strahlungsenergie der Laserstrahlung absorbiert wird.

In der EP 1 950 000 A1 ist eine Vorrichtung mit einem Strahlgenerator zur Erzeugung eines Strahls und mit einer Strahl-Fangeinrichtung beschrieben. Die Strahl-Fangeinrichtung weist Aluminium-Platten mit einander gegenüber liegenden planen Oberflächen auf. Der Strahl wird auf die Strahl-Fangeinrichtung gerichtet und durch eine wiederholte Reflexion von der ersten zur zweiten Fläche und von der zweiten zur ersten Fläche in der Strahl-Fangeinrichtung vernichtet.

In der US 4 511 216 A ist eine Strahlfalle mit einem metallischen Körper beschrieben, in dem ein zylindrischer Hohlraum gebildet ist. Der Hohlraum weist in einer ersten Zone eine spekular reflektierende Beschichtung und in einer zweiten Zone eine Energie absorbierende Beschichtung auf.

In der DE 10 2012 219 635 A1 ist eine Absorptionsvorrichtung beschrieben, die eine Zerstreuungsoptik zur Aufweitung des einfallenden Laserstrahls und einen Absorptionskörper umfasst, der eine sich in der Einfallsrichtung des aufgeweiteten Laserstrahls verjüngende Öffnung aufweist. Zwischen der Zerstreuungsoptik und dem einen, ersten Absorptionskörper ist ein zweiter Absorptionskörper mit einer den aufgeweiteten Laserstrahl umgebenden Durchtrittsöffnung angeordnet, die sich entgegen der Einfallsrichtung des Laserstrahls verjüngt.

Rückreflexionen, die von Strahlfallen ausgehen, wirken sich störend auf die Funktionalität von optischen Anordnungen aus, in denen die Strahlfallen verwendet werden. Es ist daher günstig, wenn eine Strahlfalle die Strahlungsenergie eines auftreffenden Strahls möglichst vollständig absorbiert. Insbesondere für den Fall, dass die Leistung des auftreffenden Strahls sehr hoch ist, beispielsweise bei mehr als ca. 50 kW liegt, besteht bei herkömmlichen Strahlfallen das Problem, dass die Strahlungsenergie ggf. nicht vollständig absorbiert werden kann. Zudem kann es bei der Verwendung von Strahlfallen zur Absorption von (gepulsten) Hochleistungs-Laserstrahlen ggf. zu Degradationserscheinungen der in der Strahlfalle verwendeten Materialien kommen.

### Aufgabe der Erfindung

Es ist eine Aufgabe der vorliegenden Erfindung, eine Strahlfalle der eingangs genannten Art derart weiterzubilden, dass diese die Strahlungsenergie von auftreffenden Strahlen, insbesondere von Laserstrahlen, auch bei sehr hoher Strahlungsleistung praktisch vollständig absorbiert.

### Gegenstand der Erfindung

Diese Aufgabe wird erfindungsgemäß gelöst durch eine Strahlfalle der eingangs genannten Art, bei welcher der Reflektor eine segmentierte Oberfläche mit mehreren Reflektorbereichen aufweist, die zur Reflexion eines jeweiligen Teilstrahls des auftreffenden Strahls in einen dem jeweiligen Reflektorbereich zugeordneten Absorberbereich der Absorbereinrichtung ausgebildet sind.

Der auftreffende Strahl wird an der segmentierten Oberfläche des Reflektors in mehrere Teilstrahlen zerlegt, d.h. der Reflektor dient als Zerlegungsspiegel. Die Reflektorbereiche der Oberfläche sind unterschiedlich ausgerichtet und/oder gekrümmt, so dass die an unterschiedlichen Reflektorbereichen reflektierten Teilstrahlen den Reflektor in unterschiedliche Richtungen verlassen und in unterschiedliche Absorberbereichen der Absorbereinrichtung reflektiert werden. Auf diese Weise kann die auf den Reflektor auftreffende Strahlungsenergie auf mehrere Absorberbereiche verteilt werden, wodurch sich die von einem jeweiligen Absorberbereich zu absorbierende Strahlungsenergie reduziert. Ein jeweiliger Teilstrahl kann effizienter in dem jeweiligen Absorberbereich absorbiert werden, als dies der Fall wäre, wenn der Absorberbereich die gesamte Strahlungsenergie absorbieren müsste. Die Absorberbereiche sind jeweils (ggf. geringfügig) voneinander beabstandet.

Erfindungsgemäß bildet die segmentierte Oberfläche eine umlaufende Mantelfläche des Reflektors. Die Mantelfläche des Reflektors kann insbesondere rotationssymmetrisch um eine zentrale Achse ausgebildet sein. Auf diese Weise kann die Strahlungsenergie eines entlang der zentralen Achse auftreffenden Strahls in Umfangsrichtung gleichmäßig verteilt werden. Der Reflektor bzw. die segmentierte Oberfläche kann eine im Wesentlichen konische Mantelfläche bilden. Unter einer im Wesentlichen konischen Mantelfläche wird verstanden, dass die einzelnen Reflektorbereiche bzw. Segmente der Oberfläche nicht zwingend eine stetige konische Fläche bilden, wie dies beispielsweise bei der Mantelfläche eines Kegels der Fall ist. Vielmehr können die einzelnen Reflektorbereiche eine Krümmung aufweisen und/oder unterschiedlich ausgerichtet sein. Der Reflektor bzw. die segmentierte, im Wesentlichen konisch verlaufende Oberfläche dient zudem der Aufweitung des einfallenden Strahls. Typischer Weise werden von benachbarten Reflektorbereichen der Oberfläche reflektierte Teilstrahlen in benachbarte Absorberbereiche reflektiert, dies ist aber nicht zwingend erforderlich.

Bei einer weiteren Ausführungsform sind die Reflektorbereiche konzentrisch um eine zentrale Achse des Reflektors angeordnet. Bei der zentralen Achse kann es sich insbesondere um eine Dreh-Symmetrieachse des Reflektors bzw. der Mantelfläche handeln. Durch die konzentrische Anordnung der Reflektorbereiche um die zentrale Achse kann die Strahlungsenergie eines entlang der zentralen Achse auf den Reflektor auftreffenden Strahls in radialer Richtung im Wesentlichen gleichmäßig auf mehrere unterschiedliche Absorberbereiche verteilt werden, die beispielsweise entlang der zentralen Achse übereinander angeordnet sein können, wie weiter unten näher beschrieben wird.

Bei einer weiteren Ausführungsform sind die Reflektorbereiche als Paraboloid- oder als Toroidflächen ausgebildet. Eine jeweilige Paraboloidfläche bildet typischer Weise eine rotationssymmetrisch zu einer zentralen Achse des Reflektors verlaufende (kreis-)ringförmige Fläche. An einer solchen Paraboloidfläche wird parallel zur zentralen Achse des Reflektors auf die Paraboloidfläche einfallende Strahlung in Form eines Teilstrahls reflektiert und verläuft in Richtung auf einen Fokus der Paraboloidfläche. Eine Paraboloidfläche lässt sich bei der vorliegenden Anwendung in guter Näherung durch eine Toroidfläche annähern. Eine Toroidfläche bildet eine rotationssymmetrisch zu einer zentralen Achse des Reflektors verlaufende (kreis-)ringförmige Fläche, die eine konstante Krümmung bzw. einen konstanten Krümmungsradius aufweist. Die Toroidfläche ist typischer Weise konkav gekrümmt, um parallel zur zentralen Achse einfallende Strahlung in Form eines Teilstrahls in Richtung auf einen Fokus der Toroidfläche zu reflektieren. Durch die Paraboloid- bzw. Toroidfläche kann somit die Strahlungsenergie des jeweiligen Teilstrahls gebündelt werden und die Separation von Teilstrahlen, die in benachbarte Absorberbereiche reflektiert werden, kann verbessert werden. Auf diese Weise kann insbesondere erreicht werden, dass keine bzw. nur geringfügige Strahlungsanteile der Teilstrahlen zwischen zwei benachbarte Absorberbereiche reflektiert werden.

Bei einer Weiterbildung ist zwischen einer jeweiligen Paraboloid- oder Toroidfläche eines Reflektorbereichs und einem zugeordneten Absorberbereich eine ringförmiger (bzw. kreisförmiger) Linienfokus der jeweiligen Paraboloid- bzw. Toroidfläche gebildet. Die Paraboloid- oder Toroidfläche bzw. das paraboloidische bzw. toroidische Profil bildet typischer Weise eine rotationssymmetrisch um eine zentrale Achse (Symmetrieachse) des Reflektors verlaufende Ringfläche bzw. beim zentralen Reflektorbereich, der die zentrale Achse enthält, eine konisch verlaufende Kreisfläche. Die Paraboloidfläche fokussiert einen parallel zur zentralen Achse der Paraboloidfläche einfallenden Strahl in einen ringförmigen bzw. kreisförmigen Linienfokus. Typischer Weise sind die Symmetrieachsen aller Paraboloidflächen des Reflektors identisch und stimmen mit der zentralen Achse des Reflektors überein. Entsprechendes gilt für den Fall, dass die Reflektorbereiche als Torbidflächen ausgebildet sind.

Da die Strahlung, die von dem Reflektor zur Absorbereinrichtung reflektiert wird, einen jeweiligen Linienfokus durchläuft, muss auch Strahlung, die ggf. nicht vollständig innerhalb des jeweiligen Absorberbereichs absorbiert wird, den Linienfokus erneut durchlaufen, um zum Reflektor bzw. zu dem jeweiligen Reflektorbereich zurück zu gelangen. Durch den ringförmigen Linienfokus wird in der Strahlfalle somit eine Zwangsbedingung hinzugefügt, welche den Austritt von Strahlung aus der Strahlfalle extrem unwahrscheinlich macht.

Bei einer weiteren Ausführungsform ist der Reflektor aus einem metallischen Material, insbesondere aus Kupfer, gebildet. Der Reflektor kann als (massiver) metallsicher Körper, beispielsweise aus Kupfer, gebildet sein, in den ggf. Kühlkanäle eingebracht sind, um den metallischen Körper mit einer Flüssigkeit, beispielsweise mit Wasser, zu kühlen. Kupfer weist eine hohe Reflektivität (>98 %) für Strahlung in einem vergleichsweise großen Wellenlängenbereich auf, so dass ggf. auf das Aufbringen einer reflektierenden Beschichtung auf die Oberfläche des Reflektors verzichtet werden kann. Die blanke Kupferoberfläche des Reflektors wird bei ausreichender Kühlung nicht unzulässig erwärmt, so dass diese durch die hohe Leistung der auftreffenden Strahlung keinen Schaden nimmt.

Bei einer weiteren Ausführungsform weist die Absorbereinrichtung eine zylindrische Öffnung zum Durchtritt des Strahls zur segmentierten Oberfläche des Reflektors auf. Die zylindrische Öffnung der Absorbereinrichtung ist typischer Weise parallel zur zentralen Achse des (rotationssymmetrischen) Reflektors ausgerichtet. In der Regel stimmt die Zylinderachse der zylindrischen Öffnung der Absorbereinrichtung mit der zentralen Achse des Reflektors überein. Auf diese Weise kann die an der segmentierten Oberfläche des Reflektors reflektierte Laserstrahlung in Umfangsrichtung gleichmäßig auf die Absorberbereiche der Absorbereinrichtung verteilt werden. Die segmentierte Oberfläche des Reflektors kann bezüglich der Absorbereinrichtung derart angeordnet sein, dass die Absorbereinrichtung in axialer Richtung von der segmentierten Oberfläche beabstandet angeordnet ist, es ist aber auch möglich, dass sich die segmentierte Oberfläche und die Absorbereinrichtung in axialer Richtung zumindest teilweise überlappen.

Erfindungsgemäß ist ein jeweiliger Absorberbereich der Absorbereinrichtung als Absorberkammer mit einer insbesondere ringförmigen Eintrittsöffnung für einen jeweiligen Teilstrahl des auftreffenden Strahls ausgebildet. Die (z.B. ringförmige) Eintrittsöffnung bildet typischer Weise einen Abschnitt bzw. einen Teilbereich der zylindrischen Öffnung der Absorbereinrichtung. Durch die Eintrittsöffnung tritt der von einem jeweiligen Reflektorbereich reflektierte Teilstrahl in die Absorberkammer ein, in welcher der jeweilige Teilstrahl idealer Weise vollständig absorbiert wird. Die Eintrittsöffnungen von benachbarten Absorberkammern können beispielsweise durch plattenförmige Bauteile voneinander getrennt werden, die selbst einen Teil einer jeweiligen Absorberkammer bzw. der beiden benachbarten Absorberkammern bilden und die typischer Weise zumindest im Bereich der Eintrittsöffnung senkrecht zur zentralen Achse des Reflektors ausgerichtet sind.

Bei einer Weiterbildung ist die Absorberkammer zwischen zwei parallel ausgerichteten, bevorzugt planen Absorberflächen gebildet. Die Absorberflächen bilden typischer Weise die Oberflächen von parallel ausgerichteten plattenförmigen, insbesondere planen Bauteilen. Die Absorberflächen weisen in der Regel keine zu große Absorption bzw. keinen zu großen Absorptionskoeffizienten für den auftreffenden Teilstrahl auf, da die Intensität des auftreffenden Teilstrahls in der Regel so groß ist, dass die Absorberfläche zerstört werden könnte, wenn diese den auftreffenden Teilstrahl vollständig absorbiert. Die Absorberflächen weisen daher für den auftreffenden Teilstrahl typischer Weise eine Absorption von weniger als 80 %, aber in der Regel von mehr als ca. 10% auf, d.h. die Absorberflächen weisen (pro Reflexion) eine vergleichsweise große Reflektivität auf, da keine Transmission vorhanden ist. Durch die parallele Ausrichtung der Absorberflächen wird die Strahlung mehrmals zwischen den Absorberflächen hin- und her reflektiert, bis die Strahlung vollständig absorbiert ist. Die radiale Ausdehnung der Absorberflächen bzw. der Bauteile ist typischer Weise so bemessen, dass die Anzahl der Reflexionen zwischen den Absorberflächen (nahezu) ausreicht, um den Strahlungsenergie des in die Absorberkammer eintretenden Teilstrahls vollständig zu absorbieren. Bis zur vollständigen Absorption kann die Strahlung in der jeweiligen Absorberkammer ggf. mehrere Tausend Mal hin- und her reflektiert werden.

Jedes Streuzentrum in der Absorberkammer sendet Strahlung ggf. auf direktem Weg zurück und kann in Summe zu einem nennenswerten Anteil an Strahlungsenergie führen, die nicht von der Strahlfalle absorbiert wird. Die Streuung von Strahlung in der jeweiligen Absorberkammer läuft somit der Zielsetzung, die Strahlungsenergie möglichst vollständig zu absorbieren, zuwider. Die Absorberkammern bzw. die Absorberflächen der Absorberkammern sollten daher möglichst glatt ausgebildet sein, um unerwünschte Streueffekte zu vermeiden. Auch mit relativ glatten und somit streuungsarmen Absorberflächen kann pro Reflexion eine Absorption > 50% erreicht werden.

Bei einer weiteren Weiterbildung weist die Absorberkammer an einem der Eintrittsöffnung entgegen gesetzten Ende eine zwischen den Absorberflächen angebrachte Abschlussfläche auf. Die Ausdehnung der Absorberkammern in einer Richtung senkrecht zur zentralen Achse des Reflektors kann bauraumbedingt nicht beliebig groß gewählt werden. Um zu vermeiden, dass ein geringer Anteil der Strahlungsenergie an dem der zylindrischen Öffnung entgegen gesetzten Ende der Absorbereinrichtung austritt, kann die Absorberkammer mittels einer Abschlussfläche verschlossen werden. Die Abschlussfläche kann ebenfalls als Absorberfläche ausgebildet sein, um einen Teil der Strahlungsenergie aufzunehmen.

Bei einer Weiterbildung ist die Abschlussfläche unter einem Winkel zwischen 30° und 60°, bevorzugt unter einem Winkel von 45°, zu einer der Absorberflächen ausgerichtet. Durch die Ausrichtung unter einem Winkel zu den Absorberflächen kann ein nicht absorbierter Teil der Strahlungsenergie des Teilstrahls mehrmals zwischen der Abschlussfläche und einer der Absorberflächen hin und her reflektiert werden, um die Strahlungsenergie des Teilstrahls in der jeweiligen Absorberkammer vollständig zu absorbieren. Der unvermeidbare theoretische Anteil der Strahlungsenergie des einfallenden Strahls, der die Strahlfalle wieder verlässt, kann auf diese Weise auch bei Strahlungsleistungen von 100 kW und mehr auf wenige Milliwatt oder ggf. noch weiter reduziert werden. Um die radiale Ausdehnung der Absorberkammern möglichst gering zu halten, ist es günstig, wenn sowohl die Absorberflächen als auch die Abschlussfläche eine hohe Absorption und eine geringe Rauigkeit aufweisen, was z.B. durch die Verwendung einer absorbierenden Beschichtung erreicht werden kann.

Bei einer weiteren Ausführungsform sind die beiden Absorberflächen und die Abschlussfläche an drei miteinander verbundenen plattenförmigen, insbesondere metallischen Bauteilen gebildet. Die Absorberflächen können beispielsweise an zwei einander zugewandten Seitenflächen von zwei planparallelen Metallplatten bzw. Blechen gebildet sein und die Abschlussfläche kann an einem unter einem Winkel verlaufenden Rand einer Öffnung eines weiteren metallischen, plattenförmigen Bauteils gebildet sein. Das weitere plattenförmige Bauteil kann in diesem Fall zwischen die beiden die Absorberflächen aufweisenden Bauteile eingebracht werden und einen Abstandshalter zwischen den beiden Bauteilen bilden. Die einander abgewandten Seitenflächen der beiden Bauteile können als Absorberflächen für zwei weitere, benachbarte Absorberkammern dienen. Mehrere übereinander gestapelte plattenförmige Bauteile können ggf. mittels eines Halters in ihrer relativen Lage zueinander fixiert werden, ohne dass zu diesem Zweck zwingend eine stoffschlüssige Verbindung der einzelnen plattenförmigen Bauteile erforderlich ist. Die beiden Bauteile, welche die parallelen Absorberflächen der Absorberkammer bilden, können mit dem dazwischen liegenden Bauteil, an dem die Abschlussfläche gebildet ist, aber auch stoffschlüssig, beispielsweise durch Verkleben oder durch Löten, verbunden werden.

Bei einer Weiterbildung weist mindestens eines der Bauteile mehrere Platten auf, die bevorzugt durch Löten miteinander verbunden sind. Ein solches Bauteil kann beispielsweise zwei äußere Platten aufweisen, an deren Außenseiten die Absorberflächen von zueinander benachbarten Absorberkammern gebildet sind. Die äußeren Platten können (mit Ausnahme des Bereichs, an dem die Eintrittsöffnung gebildet ist), vollflächig ausgebildet sein. Zwischen den beiden äußeren Platten können eine oder mehrere innere Platten vorgesehen sein, die Hohlräume aufweisen können. Die drei oder mehr Platten eines solchen Bauteils sind typischer Weise stoffschlüssig miteinander verbunden. Bevorzugt sind die drei oder mehr Platten durch Löten miteinander verbunden, beispielsweise durch Verlöten mit Lötfolie in einem Lötofen. Es hat sich gezeigt, dass die Lötverbindung hinsichtlich der thermischen Stabilität und Prozesssicherheit gegenüber einer anderen Art einer stoffschlüssigen Verbindung, beispielsweise einer Klebung, erhebliche Vorteile aufweist und somit das bevorzugte Fertigungsverfahren darstellt.

Bei einer weiteren Weiterbildung ist in mindestens einer der Platten des plattenförmigen Bauteils mindestens ein Kühlkanal gebildet. Die von der Absorbereinrichtung absorbierte Strahlungsenergie wird typischer Weise über eine Kühlflüssigkeit, beispielsweise in Form von Kühlwasser, abgeführt. Es ist vorteilhaft, wenn das Bauteil, an dem eine jeweilige Absorberfläche gebildet ist, direkt von der Kühlflüssigkeit durchströmt wird. Zu diesem Zweck können in einem jeweiligen plattenförmigen Bauteil, welches die Absorberfläche bzw. die Abschlussfläche aufweist, Kühlkanäle eingebracht sein. Bei der Herstellung des Bauteils in einem schichtweisen Aufbau mit mehreren Platten können die Kühlkanäle direkt in den jeweiligen (Blech-)Zuschnitt einer oder mehrerer innerer Platten eingebracht werden, um die gewünschte Kühlkanalgeometrie bzw. Kühlkammer-Geometrie zu realisieren. Es versteht sich, dass der Kühlkanal typischer Weise in eine oder mehrere der inneren Platten eingebracht wird, bevor die Platten zur Herstellung des Bauteils miteinander verbunden werden.

Ein weiterer Aspekt der Erfindung betrifft eine Strahlführungseinrichtung zur Führung eines Laserstrahls in Richtung auf einen Zielbereich zur Erzeugung von EUV-Strahlung, umfassend: eine Strahlfalle, die wie weiter oben beschrieben ausgebildet ist. Eine solche Strahlführungseinrichtung dient zur Führung eines (typischer Weise gepulsten) Laserstrahls, der in einer Strahlerzeugungseinrichtung erzeugt und verstärkt wurde. Die Strahlführungseinrichtung führt den Laserstrahl von der Strahlerzeugungseinrichtung zu einem fokussierenden Element bzw. zu einer Fokussiereinrichtung, welche dazu dient, den Laserstrahl in einem Zielbereich zu fokussieren, in dem ein Target-Material bereitgestellt wird, welches bei der Bestrahlung mit dem Laserstrahl in einen Plasma-Zustand übergeht und hierbei EUV-Strahlung emittiert.

Bei einer solchen Strahlführungseinrichtung kann ein Anteil der Strahlungsenergie bzw. der Leistung des Laserstrahls aus dem Strahlengang zwischen der Strahlerzeugungseinrichtung und dem Target-Material über einen Strahlteiler ausgekoppelt werden, beispielsweise um die Strahleigenschaften des Laserstrahls zu überwachen. Für die Überwachung trifft der ausgekoppelte Anteil der Laserstrahlung auf einen Detektor, dessen Oberfläche nur eine begrenzte Strahlungsleistung aufnehmen kann, ohne hierbei zerstört zu werden. Durch einen weiteren Strahlteiler kann die Strahlungsleistung so weit reduziert werden, dass auch bei extrem hohen Laserleistungen die zulässige Intensität auf dem Detektor nicht überschritten wird. Über die Strahlfalle kann in diesem Fall ein Anteil der Strahlungsenergie des ausgekoppelten Laserstrahls, der nicht für die Diagnose benötigt wird, absorbiert werden. Alternativ oder zusätzlich kann eine Strahlfalle auch dazu dienen, die gesamte Strahlungsenergie bzw. Strahlungsleistung des Laserstrahls aus dem Strahlengang zwischen der Strahlerzeugungseinrichtung und dem Target-Material zu absorbieren. In diesem Fall wird der Laserstrahl beispielsweise mittels eines verschiebbaren oder verschwenkbaren Umlenkspiegels, der in den Strahlengang eingebracht wird, zu der Strahlfalle umgelenkt. Ein solches Vorgehen kann beispielsweise in einem Testbetrieb der Strahlerzeugungseinrichtung vorteilhaft sein.

Bei einer Weiterbildung ist die Strahlführungseinrichtung zur Führung eines CO₂-Laserstrahls oder eines Festkörper-Laserstrahls ausgebildet. Für die Führung eines CO₂-Laserstrahls, d.h. eines Laserstrahls mit einer Wellenlänge um ca. 10,6 µm, werden bevorzugt reflektierende optische Elemente verwendet. Diese bestehen typischer Weise zumindest im Bereich ihrer Oberflächen aus metallischen Materialien, z.B. aus Kupfer, auf die ggf. eine reflektierende Beschichtung aufgebracht werden kann. Auch transmittierende optische Elemente können zur Strahlführung von CO₂-Laserstrahlung verwendet werden. Es existiert allerdings nur eine kleine Anzahl von Materialien, welche für CO₂-Laserstrahlung transparent sind. Ein Beispiel für ein solches Material ist Zinkselenid, welches u.a. auch für die Linsenherstellung verwendet werden kann. Der Laserstrahl kann alternativ von einem Festkörperlaser erzeugt werden, der eine Wellenlänge von beispielsweise ca. 1 µm erzeugt. Auch in diesem Fall kann der Reflektor aus einem metallischen Material, beispielsweise aus Kupfer, gebildet sein. Bei der Verwendung eines Festkörper-Laserstrahls, aber ggf. auch bei der Verwendung eines CO₂-Laserstrahls, kann die Strahlfalle ggf. in der Strahlungserzeugungseinrichtung selbst angeordnet werden.

Ein weiterer Aspekt der Erfindung betrifft eine EUV-Strahlungserzeugungsvorrichtung, umfassend: eine Strahlerzeugungseinrichtung zur Erzeugung eines Laserstrahls, eine Vakuum-Kammer, in der zur Erzeugung von EUV-Strahlung ein Target-Material in einen Zielbereich einbringbar ist, sowie eine Strahlführungseinrichtung wie weiter oben beschrieben zur Führung des Laserstrahls von der Strahlerzeugungseinrichtung in Richtung auf den Zielbereich. Die EUV-Strahlungserzeugungsvorrichtung kann beispielsweise in einer EUV-Lithographieanlage als EUV-Lichtquelle verwendet werden.

Ein weiterer Aspekt der Erfindung betrifft ein Verfahren zum Absorbieren eines Strahls, insbesondere eines Laserstrahls, umfassend: Zerlegen des Strahls in mehrere Teilstrahlen an mehreren unterschiedlich ausgerichteten und/oder gekrümmten Reflektorbereichen einer segmentierten Oberfläche eines Reflektors, wobei die segmentierte Oberfläche eine umlaufende Mantelfläche des Reflektors bildet, Reflektieren der Teilstrahlen an den Reflektorbereichen der segmentierten Oberfläche jeweils in Richtung auf genau einen dem jeweiligen Reflektorbereich zugeordneten Absorberbereich einer Absorbereinrichtung, sowie Absorbieren der reflektierten Teilstrahlen in den Absorberbereichen der Absorbereinrichtung, die als Absorberkammern mit einer Eintrittsöffnung für einen jeweiligen Teilstrahl des auftreffenden Strahls ausgebildet sind.

Insbesondere für den Fall, dass die Teilstrahlen jeweils über einen ringförmigen Linienfokus zu den Absorberbereichen reflektiert werden, kann pratkisch keine Strahlung von den Absorberbereichen zum Reflektor zurück gelangen.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1a: eine schematische Darstellung einer EUV-Strahlungserzeugungsvorrichtung, welche eine Strahlführungseinrichtung mit einer Strahlfalle zur Absorption der Strahlungsenergie eines Laserstrahls aufweist, der aus einem Strahlengang der EUV-Strahlungserzeugungsvorrichtung vollständig ausgekoppelt wird,
- Fig. 1b,c: zwei Darstellungen eines Details der EUV-Strahlungserzeugungsvorrichtung von Fig. 1a mit einer Strahlfalle und mit zwei Strahlteilern,
- Fig. 2: eine perspektivische Darstellung der Strahlfalle von Fig. 1a-c, welche einen Reflektor und eine Absorbereinrichtung aufweist,
- Fig. 3a,b: Darstellungen analog Fig. 2, in welcher die Absorbereinrichtung in einer Schnittdarstellung gezeigt ist,
- Fig. 4a: eine Darstellung eines Details der Strahlfalle von Fig. 2 und Fig. 3a,b mit einer Absorberkammer, in der ein an einer segmentierten Oberfläche des Reflektors reflektierter Teilstrahl des Laserstrahls mehrfach reflektiert und absorbiert wird,
- Fig. 4b: eine Darstellung eines die Absorberkammer von Fig. 4a begrenzenden plattenförmigen Bauteils, das aus drei Platten zusammengesetzt ist, sowie
- Fig. 4c: eine Draufsicht auf die mittlere der Platten von Fig. 4b mit einem darin gebildeten Kühlkanal.

In der folgenden Beschreibung der Zeichnungen werden für gleiche bzw. funktionsgleiche Bauteile identische Bezugszeichen verwendet.

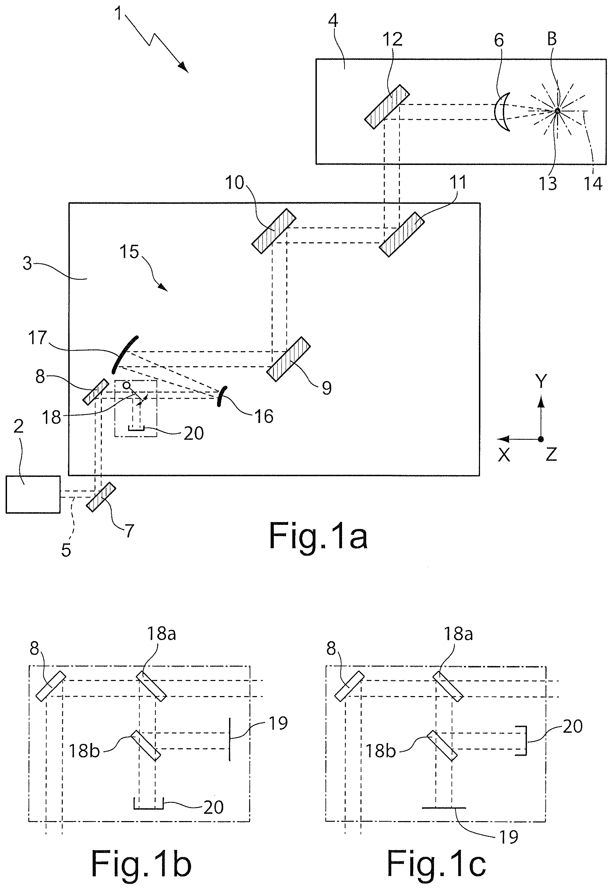

**Fig. 1a** zeigt eine EUV-Strahlungserzeugungsvorrichtung 1, welche eine Strahlerzeugungseinrichtung 2 (Strahlquelle), eine Strahlführungs-Kammer 3 sowie eine Vakuum-Kammer 4 aufweist. In einer in der Vakuum-Kammer 4 gebildeten Vakuum-Umgebung ist eine Fokussiereinrichtung in Form einer Fokussierlinse 6 angeordnet, um einen CO₂-Laserstrahl 5 in einem Zielbereich B zu fokussieren. Die in Fig. 1 gezeigte EUV-Strahlungserzeugungsvorrichtung 1 entspricht im Wesentlichen dem Aufbau, wie er in der US 2011/0140008 A1 beschrieben ist.

Die Strahlerzeugungseinrichtung 2 umfasst eine CO₂-Strahlquelle sowie mehrere Verstärker zur Erzeugung eines Laserstrahls 5 mit hoher Strahlungsleistung (> 1 kW). Für eine detaillierte Beschreibung von Beispielen für mögliche Ausgestaltungen der Strahlerzeugungseinrichtung 2 sei auf die US 2011/0140008 A1 verwiesen. Von der Strahlerzeugungseinrichtung 2 wird der Laserstrahl 5 über einer Mehrzahl von Umlenkspiegeln 7 bis 11 der Strahlführungs-Kammer 3 sowie eines weiteren Umlenkspiegels 12 in der Vakuum-Kammer 4 auf die Fokussierlinse 6 umgelenkt, welche den Laserstrahl 5 in dem Zielbereich B fokussiert, an dem Zinn als Target-Material 13 angeordnet ist. Alternativ oder zusätzlich zu einem transmissiven optischen Element können auch eines oder mehrere reflektierende Elemente als Fokussiereinrichtung dienen. Alternativ oder zusätzlich zu einer CO₂-Strahlquelle kann die Strahlerzeugungseinrichtung 2 eine andere Strahlquelle, beispielsweise einen Festkörper-Laser, aufweisen, die Laserstrahlung bei anderen Wellenlängen, beispielsweise um ca. 1 µm, erzeugt.

Das Target-Material 13 wird von dem fokussierten Laserstrahl 5 getroffen und hierbei in einen Plasma-Zustand übergeführt, der zur Erzeugung von EUV-Strahlung 14 dient. Das Target-Material 13 wird dem Zielbereich B mit Hilfe einer (nicht gezeigten) Bereitstellungseinrichtung zugeführt, welche das Target-Material 13 entlang eines vorgegebenen Pfades führt, der den Zielbereich B kreuzt. Für Details der Bereitstellung des Ziel-Materials sei ebenfalls auf die US 2011/0140008 A1 verwiesen.

In Fig. 1a ebenfalls dargestellt ist eine Einrichtung zur Vergrößerung des Strahldurchmessers des Laserstrahls 5, welche einen ersten Off-Axis Parabolspiegel 16 mit einer ersten, konvex gekrümmten reflektierenden Oberfläche und einen zweiten Off-Axis Parabolspiegel 17 mit einer zweiten, konkav gekrümmten reflektierenden Oberfläche aufweist. Die reflektierenden Oberflächen eines jeweiligen Off-Axis Parabolspiegels 16, 17 bilden jeweils die Off-Axis Segmente eines (elliptischen) Paraboloids. Der Begriff "Off-Axis" bedeutet, dass die reflektierenden Oberflächen nicht die Rotationsachse des Paraboloids (und damit auch nicht den Scheitelpunkt des Paraboloids) enthalten.

Die optischen Elemente 7 bis 11, 16, 17, 12, 6 bilden gemeinsam eine Strahlführungseinrichtung 15 zur Führung des Laserstrahls 5 in den Zielbereich B. Innerhalb der Strahlführungseinrichtung 15, ggf. auch in der Strahlerzeugungseinrichtung 2 selbst, können eine oder mehrere Strahlfallen 20 angeordnet werden, die unterschiedliche Funktionen erfüllen können. Fig. 1a zeigt eine EUV-Strahlungserzeugungsvorrichtung 1, bei welcher die gesamte Leistung des aus der Strahlerzeugungseinrichtung 2 austretenden Laserstrahls 5 mit Hilfe eines Umlenkmittels in Form eines klappbaren bzw. verschwenkbaren Umlenkspiegels 18 zur Strahlfalle 20 hin umgelenkt werden kann.

In Fig. 1a sind sowohl der Strahlengang des Laserstrahls 5 beim regulären Betrieb der EUV-Strahlungserzeugungsvorrichtung 1 als auch in einem Testbetrieb gezeigt, bei dem der Umlenkspielgel 18 die Strahlungsleistung des Laserstrahls vollständig zur Strahlfalle 20 hin umlenkt, so dass dieser nicht mehr in den Zielbereich B gelangt. Im Testbetrieb wird somit die gesamte Strahlungsleistung des Laserstrahls 5 zur Strahlfalle 20 hin umgelenkt und von dieser absorbiert, wie weiter unten näher beschrieben wird. Im regulären Betrieb trifft der Laserstrahl 5 nicht auf den Umlenkspiegel 18 und wird zum Zielbereich B durchgelassen.

Fig. 1b zeigt ein Detail bzw. einen Ausschnitt der EUV-Strahlungserzeugungsvorrichtung 1 von Fig. 1a, bei welcher zur Überwachung des Strahlengangs des Laserstrahls 5 in einem Strahlführungs-Raum der Strahlführungskammer 3 eine Einrichtung zur Überwachung des Laserstrahls 5 angeordnet ist, welche einen ersten Strahlteiler 18a in Form einer transmissiven planparallelen Platte aufweist, die unter einem Winkel, z.B. einem Winkel von 45°, zur Strahlrichtung des Laserstrahls 5 ausgerichtet ist, um einen Teil, beispielsweise ca. 1 %, der Strahlungsleistung des Laserstrahls 5 aus dem Strahlengang zum Zielbereich B auszukoppeln bzw. umzulenken. Bei dem Material der planparallelen Platte 18a kann es sich beispielsweise um Diamant handeln. Der ausgekoppelte Teil des Laserstrahls 5 trifft auf einen zweiten Strahlteiler 18b, der ebenfalls in Form einer planparallelen Platte ausgebildet ist und der unter einem Winkel, beispielsweise einem Winkel von 45°, zum ausgekoppelten Teil des Laserstrahls 5 angeordnet ist. An dem zweiten Strahlteiler 18b wird nur ein geringer Anteil der auftreffenden Strahlung zu einem Detektor 19 reflektiert, der Großteil (z.B. ca. 99%) der Strahlung wird von dem zweiten Strahlteiler 18b transmittiert und trifft auf die Strahlfalle 20. Bei dem Material der zweiten planparallelen Platte 18b kann es sich beispielsweise um Zinkselenid handeln.

Die in Fig. 1c gezeigte Anordnung unterscheidet sich von der in Fig. 1b gezeigten Anordnung darin, dass der zweite Strahlteiler 18b als teiltransmissiver Spiegel ausgebildet ist, der einen Großteil der Strahlung (z.B. > 99%) zur Strahlfalle 20 hin umlenkt. Der von dem zweiten Strahlteiler 18b transmittierte, geringe Anteil der Strahlung des Laserstrahls 5 (beispielsweise ca. 1%) trifft auf den Detektor 19. Die in Fig. 1c gezeigte Anordnung hat gegenüber der in Fig. 1b gezeigten Anordnung den Vorteil, dass nur ein vergleichsweise geringer Teil der Strahlungsleistung von dem zweiten Strahlteiler 18b transmittiert wird.

Bei den in Fig. 1b,c gezeigten Anordnungen wird durch die zwei Strahlteiler 18a, 18b die auf den Detektor 19 auftreffende Strahlungsleistung auf ein erträgliches Maß reduziert, so dass der Detektor 19 nicht durch die auftreffende Strahlung beschädigt wird. Ein erheblicher Anteil der Strahlungsleistung des Laserstrahls 5, der für die Analyse nicht benötigt wird, trifft auf die Strahlfalle 20, die zur (nahezu) vollständigen Absorption der Strahlungsleistung bzw. der Strahlungsenergie des auftreffenden Laserstrahls 5 dient. Es versteht sich, dass die in Fig. 1a gezeigte Anordnung mit der Strahlfalle 20, auf welche die gesamte Laserleistung auftrifft, mit einer der in Fig. 1b bzw. in Fig. 1c gezeigten Anordnungen in ein- und derselben EUV-Strahlungserzeugungsvorrichtung 1 realisiert sein kann.

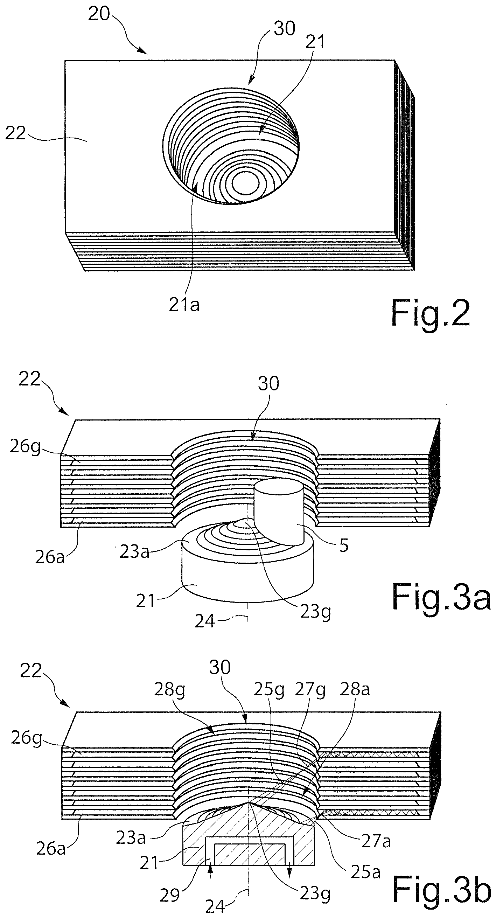

Wie in **Fig. 2** und in **Fig. 3a,b** zu erkennen ist, weist die Strahlfalle 20 einen Reflektor 21 sowie eine Absorbereinrichtung 22 auf. Der Reflektor 21 weist eine Oberfläche 21a auf, die eine rotationssymmetrische Mantelfläche des Reflektors 21 bildet und die im Wesentlichen kegelförmig ausgebildet ist. Die Oberfläche 21a weist mehrere (im gezeigten Beispiel sieben) Segmente in Form von Reflektorbereichen 23a-g auf. Die Reflektorbereiche 23a-g sind konzentrisch um die zentrale Achse 24 des Reflektors 21 angeordnet. Ein siebter, zentraler Reflektorbereich 23g, durch dessen Zentrum die zentrale Achse 24 sowie die Spitze der segmentierten Oberfläche 21a verläuft, bildet eine Kegelfläche, die weiteren Reflektorbereiche 23a-f bilden Ringflächen.

Wie in Fig. 3a zu erkennen ist, weist der Reflektor 21 einen zylindrischen Grundkörper auf, an dessen oberem Ende die segmentierte Oberfläche 21a gebildet ist. Im gezeigten Beispiel ist der Reflektor 21 aus Kupfer gebildet, das für den auftreffenden Laserstrahl 5 eine hohe Reflektivität (>98%) aufweist. In dem massiven Grundkörper des Reflektors 21 sind Kühlkanäle 29 eingebracht, durch die eine Kühlflüssigkeit, beispielsweise Kühlwasser, geleitet wird, um die segmentierte Oberfläche 21a des Reflektors 21 zu kühlen.

Jeder der Reflektorbereiche 23a-g ist bezogen auf die Strahlrichtung des Laserstrahls 5, der parallel zur zentralen Achse 24 auf den Reflektor 21 auftrifft, unterschiedlich ausgerichtet (bzw. unterschiedlich gekrümmt, s.u.), so dass ein auf einen jeweiligen Reflektorbereich 23a-g auftreffender Teilstrahl 25a-g des Laserstrahls 5 in eine jeweils unterschiedliche Richtung reflektiert wird, wie in Fig. 3b beispielhaft für den ersten und den siebten Teilstrahl 25a, 25g gezeigt ist. Der Reflektor 21, genauer gesagt die segmentierte Oberfläche 21a des Reflektors 21, bildet somit einen Zerlegungsspiegel, d.h. die an einem jeweiligen Reflektorbereich 23a-g reflektierten Teilstrahlen 25a-g des Laserstrahls 5 werden in unterschiedliche Richtungen reflektiert und treffen auf unterschiedliche Absorberbereiche der Absorbereinrichtung 22, die im gezeigten Beispiel als Absorberkammern 26a-g ausgebildet sind. Ein in eine Absorberkammer 26a-g eintretender Teilstrahl 25a-g wird in der zugehörigen Absorberkammer 26a-g typischer Weise vollständig absorbiert.

Bei dem in Fig. 3a,b gezeigten Beispiel sind die Reflektorbereiche 23a-g der segmentierten Oberfläche 21a als Paraboloidflächen ausgebildet, d.h. diese bilden jeweils eine rotationssymmetrisch zur zentralen Achse 24 des Reflektors 21 verlaufende Fläche, die in radialer Richtung eine parabelförmige Krümmung aufweist. Da die (konkav gekrümmten) Paraboloidflächen 23a-g von der zentralen Achse 24 weg gerichtet sind, wird ein auf eine jeweilige Paraboloidfläche 23a-g auftreffender Teilstrahl 25a-g des Laserstrahls 5 jeweils auf einen ringförmigen Linienfokus 27a-g fokussiert, der in der in Fig. 3b gezeigten Schnittdarstellung jeweils in Form eines (Brenn-)Punktes dargestellt ist. Alternativ zur Ausbildung als Paraboloidflächen 23a-g können die bzw. einzelne der Reflektorbereiche 23a-g der segmentierten Oberfläche 21a auch als (konkav gekrümmte) Toroidflächen ausgebildet sein, die in radialer Richtung eine konstante Krümmung bzw. einen konstanten Krümmungsradius aufweisen. Die als Toroidflächen ausgebildeten Reflektorbereiche 23a-g reflektieren einen jeweils auftreffenden Teilstrahl 25a-g ebenfalls auf einen ringförmigen Linienfokus 27a-g.

Wie in Fig. 3b ebenfalls zu erkennen ist, ist der jeweilige Linienfokus 27a-g zwischen einem Reflektorbereich 23a-g und der diesem zugeordneten Absorberkammer 26a-g gebildet. Durch die Fokussierung eines jeweiligen Teilstrahls 25a-g zwischen dem Reflektorbereich 23a-g und der zugehörigen Absorberkammer 26a-g kann der jeweilige Teilstrahl 25a-g gezielt so ausgerichtet werden, dass die Strahlungsenergie des von einem jeweiligen Reflektorbereich 23a-g reflektierten Teilstrahls 25a-g vollständig durch eine Einlassöffnung 28a-g in eine jeweilige Absorberkammer 26a-g eintritt. Die Einlassöffnungen 28a-g der Absorberkammern 26a-g sind im gezeigten Beispiel entlang einer Mantelfläche einer zylindrischen Öffnung 30 der Absorbereinrichtung 22 gebildet, deren Zylinderachse mit der zentralen Achse 24 des Reflektors 21 übereinstimmt.

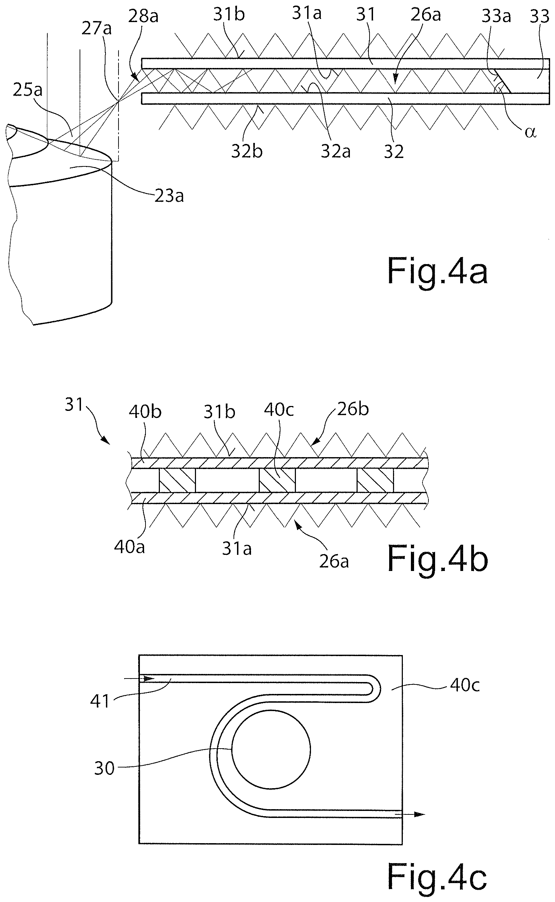

Fig. 4 zeigt ein Detail der ersten Absorberkammer 26a der Absorbereinrichtung 22 in einer Schnittdarstellung. Die Absorberkammer 26a weist eine erste, plane Absorberfläche 31a und eine zweite, ebenfalls plane Absorberfläche 32a auf, die parallel zur ersten Absorberfläche 31a angeordnet ist. Die beiden Absorberflächen 31a, 32a sind im gezeigten Beispiel mit einer absorbierenden Beschichtung versehen, die einen Anteil von mehr als 50% der auf die jeweilige Absorberfläche 31a, 32a auftreffenden Strahlungsenergie absorbiert, beispielsweise mit einer KEPLA-COAT-Beschichtung. Die Absorberflächen 31a, 32a weisen eine geringe Rauheit auf, um die Bildung von Streustrahlung zu vermeiden.

Ein nicht an einer jeweiligen Absorberfläche 31a, 32a absorbierter Teil der Strahlungsenergie des ersten Teilstrahls 25a wird zwischen den beiden parallelen Absorberflächen 31a, 32a hin und her reflektiert, wodurch die Strahlungsenergie des ersten Teilstrahls 25a nahezu vollständig absorbiert wird. Ein sehr geringer Teil der Strahlungsenergie des Teilstrahls 25a trifft auf eine Abschlussfläche 33a der Absorberkammer 26a, welche unter einem Winkel a von 45° zur zweiten Absorberfläche 32a ausgerichtet ist. Die verbleibende Strahlungsenergie des ersten Teilstrahls 25a wird zwischen der Abschlussfläche 33a und der zweiten Absorberfläche 32a hin- und her reflektiert, bis die Strahlungsenergie des ersten Teilstrahls 25a vollständig absorbiert ist. Der Winkel a zwischen der zweiten Absorberfläche 32a und der Abschlussfläche 33a kann ggf. von 45° abweichen und beispielsweise zwischen ca. 30° und 60° liegen. Für den Fall, dass nicht absorbierte Strahlung die Absorberkammer 26a durch die Eintrittsöffnung 28a verlässt, kann diese Strahlung nur für den Fall zu dem Reflektor 21 zurück gelangen, dass diese den Linienfokus 27a durchläuft.

Die erste und zweite Absorberfläche 31a, 32a sind im gezeigten Beispiel an einem ersten und zweiten metallischen plattenförmigen Bauteil 31, 32 gebildet. Die Abschlussfläche 33a ist an einem weiteren plattenförmigen Bauteil 33 in Form eines Blechs gebildet. Die Abschlussfläche 33a ist hierbei als angeschrägter Rand bzw. Fase an einer kreisförmigen Öffnung in dem weiteren plattenförmigen Bauteil 33 gebildet. Zur Herstellung der ersten Absorberkammer 26a werden die drei Bauteile 31-33 übereinander gelegt und können dauerhaft, beispielsweise stoffschlüssig, miteinander verbunden werden. Die stoffschlüssige Verbindung der drei Bauteile 31-33 kann z.B. durch eine Klebung erfolgen. Bevorzugt werden die drei Bauteile 31-33 durch Löten z.B. in einem Lötofen unter Verwendung einer Lötfolie miteinander verbunden. Die drei dauerhaft miteinander verbundenen plattenförmigen Bauteile 31, 32, 33 bilden ein Plattenmodul, in der eine jeweilige Absorberkammer 26a gebildet ist.

Durch das Stapeln mehrerer solcher Plattenmodule übereinander kann die Absorbereinrichtung 22 in einem schichtweisen Aufbau realisiert werden, was die Herstellung der Absorbereinrichtung 22 stark vereinfacht. Die gestapelten Plattenmodule können ggf. mittels eines Halters in ihrer relativen Lage zueinander fixiert werden, ohne dass zu diesem Zweck eine stoffschlüssige Verbindung der einzelnen Plattenmodule erforderlich ist.

Hierbei ist es möglich, die beiden einander gegenüber liegenden Seiten eines jeweiligen ersten bzw. zweiten (baugleichen) plattenförmigen Bauteils 31, 32 als Absorberflächen zu verwenden. In diesem Fall bilden die einander gegenüber liegenden Seitenflächen eines jeweiligen plattenförmigen ersten bzw. zweiten Bauteils 31, 32 jeweils eine Absorberfläche in einer von zwei zueinander benachbarten Absorberkammern. In diesem Fall können alle plattenförmigen Bauteile der Absorberanordnung 22 miteinander verbunden und somit in ihrer relativen Lage zueinander fixiert werden.

**Fig. 4b** zeigt ein erstes plattenförmiges Bauteil 31, welches die obere Absorberfläche 31a der in Fig 4a gezeigten Absorberkammer 26a bildet, in einer Detaildarstellung. Das plattenförmige Bauteil 31 weist zwei äußere - abgesehen von der kreiszylindrischen Öffnung 30 - vollflächig ausgebildete Platten 40a, 40b auf, zwischen denen eine innere Platte 40c angeordnet ist. An der Unterseite der in Fig. 4b unteren Platte 40a ist die obere Absorberfläche 31a der ersten Absorberkammer 26a gebildet. An der Oberseite der in Fig. 4b oberen Platte 40b ist die untere Absorberfläche 31b der zweiten Absorberkammer 26b gebildet. Die innere Platte 40c ist durchbrochen und weist Kühlkanäle 41 auf, von denen beispielhaft einer in **Fig. 4c** (mit einer beispielhaften Kühlkanal-Geometrie) dargestellt ist. Die drei Platten 40a-c werden typischer Weise auf die weiter oben beschriebene Weise miteinander verlötet oder ggf. verklebt. Durch die Kühlkanäle 41 fließt eine Kühlflüssigkeit, typischer Weise in Form von Kühlwasser

Das zweite plattenförmige Bauteil 32 sowie das weitere plattenförmige Bauteil 33, an dem die Abschlussfläche 33a gebildet ist, können ebenfalls wie in Fig. 4b bzw. Fig. 4c gezeigt ausgebildet sein, d.h. aus mehreren Platten aufgebaut sein. Auf diese Weise können die drei Bauteile 31, 32, 33 mittels einer Kühlflüssigkeit, beispielsweise in Form von Kühlwasser, gekühlt werden, welche direkt durch die jeweiligen Bauteile 31, 32, 33 bzw. die jeweiligen Kühlkanäle 41 einer Platte 40c fließen kann, um die Strahlungsenergie des jeweiligen Teilstrahls 25a-g effizient abzuführen. Der schichtweise Aufbau der Absorbereinrichtung 22 erleichtert die Einbringung der Kühlkanäle 41 in die jeweiligen Bauteile 31-33. Die gesamte Absorbereinrichtung 22 kann von einer (nicht gezeigten) von einem Kühlfluid, z.B. Kühlwasser, durchflossenen Kühleinrichtung umgeben sein, um die absorbierte Strahlungsenergie aufzunehmen.

Bei der weiter oben gezeigten Absorbereinrichtung 22 sind die Reflektorbereiche 23a-g der segmentierten Oberfläche 21a des Reflektors 21 derart ausgebildet, dass die reflektierten Teilstrahlen 25a-g durch eine jeweilige Eintrittsöffnung 28a-g im Wesentlichen unter einem Winkel von 45° auf eine der parallelen Absorberflächen 31a, 32a auftreffen. Auf diese Weise können unter gleichem Winkel (theoretisch) beliebig viele Reflexionen erfolgen. Es versteht sich aber, dass es grundsätzlich eine Vielzahl von möglichen Winkeln gibt, unter denen die Reflexion in einer jeweiligen Absorberkammer 26a-g erfolgen kann. Es ist daher auch nicht zwingend erforderlich, dass die Absorberflächen 31a, 32a der jeweiligen Absorberkammer 26a-g parallel zueinander ausgerichtet sind.

Auf die weiter oben beschriebene Weise kann auch bei hohen Strahlungsleistungen des auftreffenden (gepulsten) Laserstrahls 5 von z.B. mehr als 100 kW eine Strahlfalle 20 realisiert werden, bei der praktisch keine Rückreflexionen auftreten, d.h. bei der auch bei derart hohen Strahlungsleistungen der unvermeidbare Anteil der Strahlungsleistung, welcher die Strahlfalle 20 verlässt, auf wenige Milliwatt oder weniger reduziert werden kann. Zudem kann die weiter oben beschriebene Strahlfalle 20 mit einem vergleichsweise geringen Bauraum realisiert werden.

## Patentansprüche

1. Strahlfalle (20), umfassend:
einen Reflektor (21) zur Reflexion eines auf eine Oberfläche (21a) des Reflektors (21) auftreffenden Strahls, insbesondere eines Laserstrahls (5), sowie eine Absorbereinrichtung (22) zur Absorption des an der Oberfläche (21a) des Reflektors (21) reflektierten Strahls,
wobei die Oberfläche (21a) eine umlaufende Mantelfläche (21) des Reflektors (21) bildet,
wobei
die Oberfläche (21a) des Reflektors (21) segmentiert ist und mehrere unterschiedlich ausgerichtete und/oder gekrümmte Reflektorbereiche (23a-g) zur Zerlegung des auftreffenden Strahls in mehrere Teilstrahlen (25a-g) aufweist,
**gekennzeichnet dadurch, dass**
die Reflektorbereiche (23a-g) zur Reflexion eines jeweiligen Teilstrahls (25a-g) des auftreffenden Strahls in einen dem jeweiligen Reflektorbereich (23a-g) zugeordneten Absorberbereich (26a-g) der Absorbereinrichtung (22) ausgebildet sind, und wobei ein jeweiliger Absorberbereich der Absorbereinrichtung (22) als Absorberkammer (26a-g) mit einer Eintrittsöffnung (28a-g) für einen jeweiligen Teilstrahl (25a-g) des auftreffenden Strahls ausgebildet ist.

2. Strahlfalle nach Anspruch 1, bei welcher die segmentierte Oberfläche (21a) eine rotationssymmetrische Mantelfläche des Reflektors (21) bildet.

3. Strahlfalle nach einem der Ansprüche 1 oder 2, bei welcher die Reflektorbereiche (23a-g) konzentrisch um eine zentrale Achse (24) des Reflektors (21) angeordnet sind.

4. Strahlfalle nach einem der vorhergehenden Ansprüche, bei welcher die Reflektorbereiche (23a-g) als Paraboloidflächen oder als Toroidflächen ausgebildet sind.

5. Strahlfalle nach Anspruch 4, bei welcher zwischen einer jeweiligen Paraboloid- oder Toroidfläche (23a-g) und einem zugeordneten Absorberbereich (26a-g) ein ringförmiger Linienfokus (27a-g) der jeweiligen Paraboloid- oder Toroidfläche (23a-g) gebildet ist.

6. Strahlfalle nach einem der vorhergehenden Ansprüche, bei welcher die Absorbereinrichtung (22) eine zylindrische Öffnung (30) zum Durchtritt des Strahls zur segmentierten Oberfläche (21a) des Reflektors (21) aufweist.

7. Strahlfalle nach einem der vorhergehenden Ansprüche, bei welcher der Reflektor (21) aus einem metallischen Material, insbesondere aus Kupfer, gebildet ist.

8. Strahlfalle nach einem der vorhergehenden Ansprüche, bei welcher die Absorberkammer (26a) zwischen zwei parallel ausgerichteten, bevorzugt planen Absorberflächen (31a, 32a) gebildet ist.

9. Strahlfalle nach Anspruch 8, bei welcher die Absorberkammer (26a) an einem der Eintrittsöffnung (28a) entgegengesetzten Ende eine zwischen den Absorberflächen (31a, 32a) angebrachte Abschlussfläche (33a) aufweist.

10. Strahlfalle nach Anspruch 9, bei welcher die Abschlussfläche (33a) unter einem Winkel (α) zwischen 30° und 60°, bevorzugt unter einem Winkel (α) von 45°, zu den parallelen Absorberflächen (31a, 32a) ausgerichtet ist.

11. Strahlfalle nach Anspruch 10, bei welcher die beiden Absorberflächen (31a, 32a) und die Abschlussfläche (33a) an drei plattenförmigen, insbesondere metallischen Bauteilen (31, 32, 33) gebildet sind.

12. Strahlfalle nach Anspruch 11, bei welcher mindestens eines der Bauteile (31) mehrere Platten (40a-c) aufweist, die bevorzugt durch Löten miteinander verbunden sind.

13. Strahlfalle nach Anspruch 12, bei welcher in mindestens einer der Platten (40c) mindestens ein Kühlkanal (41) gebildet ist.

14. Strahlführungseinrichtung (18) zur Führung eines Laserstrahls (5) in Richtung auf einen Zielbereich (B) zur Erzeugung von EUV-Strahlung (14), umfassend:
eine Strahlfalle (20) nach einem der vorhergehenden Ansprüche.

15. Strahlführungseinrichtung nach Anspruch 14, die zur Führung eines CO₂-Laserstrahls (5) oder eines Festkörper-Laserstrahls ausgebildet ist.

16. EUV-Strahlungserzeugungsvorrichtung (1), umfassend:
eine Strahlerzeugungseinrichtung (2) zur Erzeugung eines Laserstrahls (5),
eine Vakuum-Kammer (4), in der zur Erzeugung von EUV-Strahlung (14) ein Target-Material (13) in einem Zielbereich (B) einbringbar ist, sowie
eine Strahlführungseinrichtung (15) nach Anspruch 14 oder 15 zur Führung des Laserstrahls (5) von der Strahlerzeugungseinrichtung (2) in Richtung auf den Zielbereich (B).

17. Verfahren zum Absorbieren eines Strahls, insbesondere eines Laserstrahls (5), umfassend:
Zerlegen des Strahls in mehrere Teilstrahlen (25a-g) an mehreren unterschiedlich ausgerichteten und/oder gekrümmten Reflektorbereichen (23a-g) einer segmentierten Oberfläche (21a) eines Reflektors (21), wobei die segmentierte Oberfläche (21a) eine umlaufende Mantelfläche des Reflektors (21) bildet,
Reflektieren der Teilstrahlen (25a-g) an den Reflektorbereichen (23a-g) der segmentierten Oberfläche (21a) jeweils in Richtung auf einen dem jeweiligen Reflektorbereich (23a-g) zugeordneten Absorberbereich (26a-g) einer Absorbereinrichtung (22), sowie
Absorbieren der reflektierten Teilstrahlen (25a-g) in den Absorberbereichen (26ag) der Absorbereinrichtung (22), die als Absorberkammern (26a-g) mit einer Eintrittsöffnung (28-g) für einen jeweiligen Teilstrahl (25a-g) des auftreffenden Strahls ausgebildet sind.

## Claims

1. A beam trap (20), comprising:
a reflector (21) for reflecting a beam, in particular a laser beam (5), that is incident on a surface (21a) of the reflector (21), and an absorber device (22) for absorbing the beam reflected at the surface (21a) of the reflector (21), wherein the surface (21a) forms a circumferential lateral surface of the reflector (21), wherein the surface (21a) of the reflector (21) is segmented and has a plurality of differently aligned and/or curved reflector regions (23a-g) for splitting the incident beam into a plurality of partial beams (25a-g),
**characterized in that**
the reflector regions (23a-g) are configured for reflecting a respective partial beam (25a-g) of the incident beam into an absorber region (26a-g) of the absorber device (22) that is associated with the respective reflector region (23a-g), and
wherein a respective absorber region of the absorber device (22) is configured as an absorber chamber (26a-g) having an entrance opening (28-g) for a respective partial beam (25a-g) of the incident beam.

2. The beam trap as claimed in claim 1, in which the segmented surface (21a) forms a rotation-symmetrical lateral surface of the reflector (21).

3. The beam trap as claimed in either of claim 1 or 2, in which the reflector regions (23a-g) are arranged concentrically around a central axis (24) of the reflector (21).

4. The beam trap as claimed in one of the preceding claims, in which the reflector regions (23a-g) are configured as paraboloid surfaces or as toroidal surfaces.

5. The beam trap as claimed in claim 4, in which a ring-shaped line focus (27a-g) of the respective paraboloid or toroidal surface (23a-g) is formed between a respective paraboloid or toroidal surface (23a-g) and an associated absorber region (26a-g).

6. The beam trap as claimed in one of the preceding claims, in which the absorber device (22) has a cylindrical opening (30) for the passage of the beam to the segmented surface (21a) of the reflector (21).

7. The beam trap as claimed in one of the preceding claims, in which the reflector (21) is made from a metallic material, in particular copper.

8. The beam trap as claimed in one of the preceding claims, in which the absorber chamber (26a) is formed between two preferably planar absorber surfaces (31a, 32a) which have parallel alignment.

9. The beam trap as claimed in claim 8, in which the absorber chamber (26a) has a termination surface (33a) provided between the absorber surfaces (31a, 32a) at an end that is opposite to the entrance opening (28a).

10. The beam trap as claimed in claim 9, in which the termination surface (33a) is aligned at an angle (α) of between 30° and 60°, preferably at an angle (α) of 45°, with respect to the parallel absorber surfaces (31a, 32a).

11. The beam trap as claimed in claim 10, in which the two absorber surfaces (31a, 32a) and the termination surface (33a) are formed on three plate-like, in particular metallic components (31, 32, 33).

12. The beam trap as claimed in claim 11, in which at least one of the components (31) has a plurality of plates (40a-c), which are connected to one another preferably by way of soldering.

13. The beam trap as claimed in claim 12, in which at least one cooling channel (41) is formed in at least one of the plates (40c).

14. A beam guide device (18) for guiding a laser beam (5) in the direction of a target region (B) for generating EUV radiation (14), comprising:
a beam trap (20) as claimed in one of the preceding claims.

15. The beam guide device as claimed in claim 14, which is configured for guiding a CO₂ laser beam (5) or a solid-state laser beam.

16. An EUV beam generation apparatus (1), comprising:
a beam generation device (2) for generating a laser beam (5), a vacuum chamber (4) into which a target material (13) is able to be brought into a target region (B) for generating EUV radiation (14), and
a beam guide device (15) as claimed in claim 14 or 15 for guiding the laser beam (5) from the beam generation device (2) in the direction of the target region (B).

17. A method for absorbing a beam, in particular a laser beam (5), comprising:
splitting the incident beam into a plurality of partial beams (25a-g) at a plurality of differently aligned and/or curved reflector regions (23a-g) of a segmented surface (21a) of a reflector (21), wherein the segmented surface (21a) forms a circumferential lateral surface of the reflector (21),
reflecting of the partial beams (25a-g) of the beam which is incident on the segmented surface (21a) of the reflector (21) at a plurality of reflector regions (23a-g) of the segmented surface (21a) in each case in the direction of an absorber region (26a-g) of an absorber device (22) which is associated with the respective reflector region (23a-g), and
absorbing the reflected partial beams (25a-g) in the absorber regions (26a-g) of the absorber device (22) which are configured as absorber chambers (26a-g) having an entrance opening (28-g) for a respective partial beam (25a-g) of the incident beam.

## Revendications

1. Piège à faisceau (20), comprenant :
un réflecteur (21) permettant de réfléchir un faisceau, en particulier un faisceau laser (5), incident sur une surface (21a) du réflecteur (21), et
un dispositif d'absorption (22) permettant d'absorber le faisceau réfléchi sur la surface (21a) du réflecteur (21),
la surface (21a) formant une surface latérale périphérique (21) du réflecteur (21),
la surface (21a) du réflecteur (21) étant segmentée et présentant plusieurs régions de réflexion (23a à g) différemment orientées et/ou incurvées afin de décomposer le faisceau incident en plusieurs sous-faisceaux (25a à g),
**caractérisé en ce que**
les régions de réflexion (23a à g) sont conçues pour réfléchir un sous-faisceau (25a à g) respectif du faisceau incident dans une région d'absorption (26a à g), associée à la région de réflexion (23a à g) respective, du dispositif d'absorption (22) et une région d'absorption respective du dispositif d'absorption (22) est réalisée sous la forme d'une chambre d'absorption (26a à g) avec un orifice d'entrée (28a à g) pour un sous-faisceau (25a à g) respectif du faisceau incident.

2. Piège à faisceau selon la revendication 1, au sein duquel la surface segmentée (21a) forme une surface latérale à symétrie de rotation du réflecteur (21).

3. Piège à faisceau selon l'une quelconque des revendications 1 ou 2, au sein duquel les régions de réflexion (23a à g) sont agencées de manière concentrique autour d'un axe central (24) du réflecteur (21).

4. Piège à faisceau selon l'une quelconque des revendications précédentes, au sein duquel les régions de réflexion (23a à g) sont réalisées sous la forme de surfaces paraboloïdes ou de surfaces toroïdales.

5. Piège à faisceau selon la revendication 4, au sein duquel un foyer linéaire (27a à g) en forme d'anneau de la surface paraboloïde ou toroïdale (23a à g) respective est formé entre une surface paraboloïde ou toroïdale (23a à g) respective et une région d'absorption (26a à g) associée.

6. Piège à faisceau selon l'une quelconque des revendications précédentes, au sein duquel le dispositif d'absorption (22) présente un orifice cylindrique (30) permettant le passage du faisceau vers la surface segmentée (21a) du réflecteur (21).

7. Piège à faisceau selon l'une quelconque des revendications précédentes, au sein duquel le réflecteur (21) est formé à partir d'un matériau métallique, en particulier de cuivre.

8. Piège à faisceau selon l'une quelconque des revendications précédentes, au sein duquel la chambre d'absorption (26a) est formée entre deux surfaces d'absorption (31a, 32a) orientées parallèlement, de manière préférée planes.

9. Piège à faisceau selon la revendication 8, au sein duquel la chambre d'absorption (26a) présente une surface d'extrémité (33a) installée entre les surfaces d'absorption (31a, 32a) à une extrémité opposée à l'orifice d'entrée (28a).

10. Piège à faisceau selon la revendication 9, au sein duquel la surface d'extrémité (33a) est orientée selon un angle (α) compris entre 30° et 60°, de manière préférée selon un angle (α) de 45°, par rapport aux surfaces d'absorption parallèles (31a, 32a).

11. Piège à faisceau selon la revendication 10, au sein duquel les deux surfaces d'absorption (31a, 32a) et la surface d'extrémité (33a) sont formées au niveau de trois composants (31, 32, 33) en forme de plaque, en particulier métalliques.

12. Piège à faisceau selon la revendication 11, au sein duquel au moins un des composants (31) présente plusieurs plaques (40a à c) qui sont de manière préférée reliées les unes aux autres par brasage.

13. Piège à faisceau selon la revendication 12, au sein duquel au moins un canal de refroidissement (41) est formé dans au moins une des plaques (40c).

14. Dispositif de guidage de faisceau (18) permettant de guider un faisceau laser (5) en direction d'une région cible (B) afin de produire un rayonnement UVE (14), comprenant :
un piège à faisceau (20) selon l'une quelconque des revendications précédentes.

15. Dispositif de guidage de faisceau selon la revendication 14, qui est conçu pour guider un faisceau laser CO₂ (5) ou un faisceau laser à l'état solide.

16. Dispositif de production de rayonnement UVE (1), comprenant :
un dispositif de production de faisceau (2) permettant de produire un faisceau laser (5),
une chambre à vide (4) dans laquelle un matériau cible (13) peut être introduit dans une région cible (B) afin de produire un rayonnement UVE (14), et
un dispositif de guidage de faisceau (15) selon la revendication 14 ou 15 permettant de guider le faisceau laser (5) du dispositif de production de faisceau (2) en direction de la région cible (B).

17. Procédé d'absorption d'un faisceau, en particulier d'un faisceau laser (5), comprenant les étapes consistant à :
décomposer le faisceau en plusieurs sous-faisceaux (25a à g) au niveau de plusieurs régions de réflexion (23a à g) différemment orientées et/ou incurvées d'une surface segmentée (21a) d'un réflecteur (21), la surface segmentée (21a) formant une surface latérale périphérique du réflecteur (21),
réfléchir les sous-faisceaux (25a à g) au niveau des régions de réflexion (23a à g) de la surface segmentée (21a) respectivement en direction d'une région d'absorption (26a à g), associée à la région de réflexion (23a à g) respective, d'un dispositif d'absorption (22), et
absorber les sous-faisceaux réfléchis (25a à g) dans les régions d'absorption (26a à g) du dispositif d'absorption (22) qui sont réalisées sous la forme de chambres d'absorption (26a à g) avec un orifice d'entrée (28 à g) pour un sous-faisceau (25a à g) respectif du faisceau incident.
